(19) Europäisches Patentamt
European Patent Office
Office européen des brevets

(11) Veröffentlichungsnummer : **0 431 302 B1**

# (12) EUROPÄISCHE PATENTSCHRIFT

(45) Veröffentlichungstag der Patentschrift : **23.03.94 Patentblatt 94/12**

(51) Int. Cl.$^5$ : **C09D 5/34**

(21) Anmeldenummer : **90120570.8**

(22) Anmeldetag : **26.10.90**

## (54) Verwendung härtbarer Cycloaliphaten-Derivate in Dübelmassen.

(30) Priorität : **05.12.89 DE 3940138**

(43) Veröffentlichungstag der Anmeldung : **12.06.91 Patentblatt 91/24**

(45) Bekanntmachung des Hinweises auf die Patenterteilung : **23.03.94 Patentblatt 94/12**

(84) Benannte Vertragsstaaten : **AT BE CH DE FR GB IT LI SE**

(56) Entgegenhaltungen : **DE-A- 3 215 932**

(73) Patentinhaber : **HILTI Aktiengesellschaft**
**FL-9494 Schaan (LI)**

(72) Erfinder : **Hense, Ulrich Dr.**
**Römerauterrasse 5**
**W-8910 Landsberg (DE)**
Erfinder : **Mauthe, Peter**
**Herbert-Kessel-Strasse 8**
**W-8939 Türkheim (DE)**
Erfinder : **Hinterwaldner, Rudolf**
**Kastanienstrasse 13**
**W-8000 München 90 (DE)**

(74) Vertreter : **Wildi, Roland**
**Hilti Aktiengesellschaft Patentabteilung**
**FL-9494 Schaan (LI)**

**EP 0 431 302 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Als Dübelmassen haben sich in den beiden letzten Jahrzehnten in großem Umfang Gemische, insbesondere Lösungen von ungesättigten Polyestern mit bzw. in niedermolekularen, monoethylenisch ungesättigten Monomeren mit einer endständigen $H_2C = C <$ -Gruppe, wie Styrol, Vinyltoluol, Vinylacetat, $C_1$ bis $C_{18}$ Alkylester der Acryl- bzw. Methacrylsäure durch-gesetzt. Wenngleich diese zur Copolymerisation mit den ungesättigten Polyesterharzen befähigten Monomere, vielfach auch als Vernetzer bezeichnet, brauchbare Reaktionspartner zur Härtung der Dübelmasse durch freiradikalische Polymerisationen sind, so sind sie doch mit technischen, physiologischen und toxikologischen Problemen behaftet, die durch ihre hohe Wirtschaftlichkeit nicht voll ausgeglichen werden. Zu bedenken sind u. a. die verschärften gesetzlichen arbeitshygienischen Auflagen, wie z.B. beim Styrol. Für den wirtschaftlichen Standardreaktionspartner "Monostyrol" wird z. Zt. im Auftrag der Senatskommission zur Prüfung gesundheitsschädlicher Arbeitsstoffe eine Überprüfung auf krebserzeugende Wirkung vorgenommen. Nachdem der MAK-Wert vor kurzem erneut auf 20 ppm/$Nm^3$ zurückgenommen und der BAT-Wert[1)] auf 2g/ltr festgelegt wurde, treten beim Verarbeiten von monostyrolhaltigen Polyesterdübelmassen nicht nur arbeitshygienische, sondern auch Probleme der Umwelt auf, die nicht allein in einer Geruchsbelastung zu suchen sind.

Weiter werden für die fortschreitende Güte- und Qualitätssicherung, insbesondere im Bereich der tragenden Befestigungstechnik, Dübelmassen gefordert, die bei der Anwendung der geforderten einfachen und trotzdem sicheren Verarbeitung - die Verarbeitung erfolgt nicht nur durch Fachleute - abgesehen von den arbeitshygienischen und Umweltauflagen technische Eigenschaftsverbesserungen, wie z. B. hohe Lagerstabilität, erhöhte Adhäsion, auch auf feuchten Untergründen, schnelles Abbinden, geringen Schrumpf, erhöhte Auszugswerte mit relativ kleinen Variationskoeffizienten usw. liefern.

Es wurde nun gefunden, daß die Verwendung von durch Polymerisation härtbaren, einfach oder mehrfach durch ethylenisch ungesättigte Reste substituierten Cycloaliphaten der Gruppe A, bestehend aus

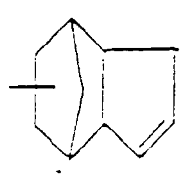 , 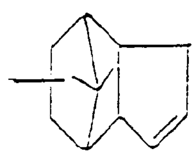 , 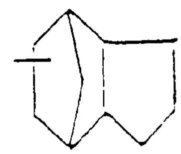 , 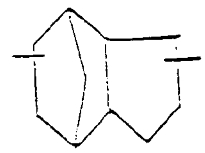 ,

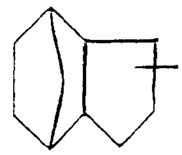 , 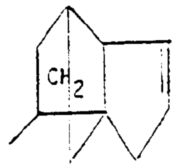 , 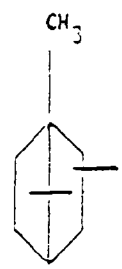 , 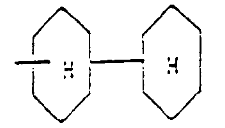 ,

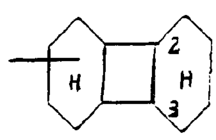 , 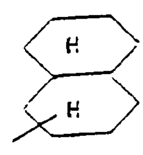 , 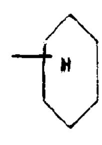 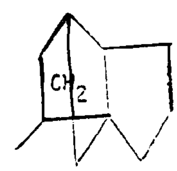

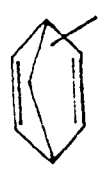 , 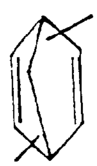 , 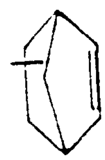 , 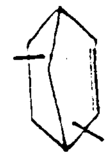 ,

[1)] BAT-Wert = Biologische Arbeitsstofftoleranzwerte

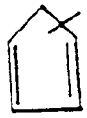 , 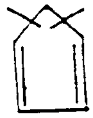 , 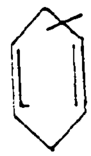 , 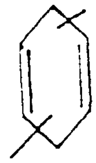 ,

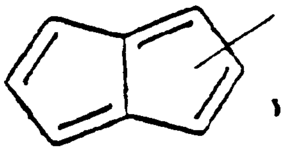 , 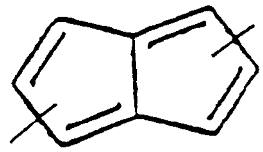

in bzw. als Dübelmassen zur Befestigung von Verankerungen in Aufnahmewerkstoffen zu Produkten bzw. Befestigungen mit überlegenen, vorteilhaften Eigenschaften führt. Dabei können die ethylenisch ungesättigten Reste, z.B. Acryl- oder Methacrylsäure-Reste mit den Cycloaliphaten direkt oder über Zwischenglieder, z.B. zweiwertige, gegebenenfalls substituierte, aliphatische Kohlenwasserstoff- oder Polyolreste verbunden sein. Die Härtung bzw. Polymerisation erfolgt mittels der für Verbindungen dieser Art üblichen Reaktionsinitiatoren, z.B. mit radikalbildenden Härtern, wie Peroxi-Verbindungen oder z.B. auch durch energiereiche Strahlung. Die Dübelmassen können noch weitere für Dübelmassen geeignete Bestandteile enthalten, wie Beschleuniger, Stabilisatoren, viskositätsbeeinflussende Mittel, Füllmittel, Thixotropiermittel, und/oder weitere polymerisierbare bzw. mit den vorgenannten ethylenisch ungesättigt substituierten Cycloaliphaten copolymerisierbare Verbindungen, insbesondere Polyester, Epoxidacrylate und dergleichen.

Cycloaliphatische Verbindungen der vorgenannten Art und deren Herstellung sind bereits bekannt (z.B. DE-OSen 28 25 737, 29 31 925, 32 15 932; EP-A1 0 047 120 und EP-A2 0 072 127; US-PSen 4 097 677, 4 299 761 und 4 400 413). Aus der dort beschriebenen Brauchbarkeit dieser Verbindungen als Beschichtungsmaterial und Lacke ließ sich indessen der Gegenstand vorliegender Erfindung nicht ableiten.

Überraschenderweise verleihen die für die Dübelmassen bzw. deren Herstellung erfindungsgemäß verwendeten Verbindungen den Dübelmassen eine Reihe von Eigenschaften bzw. Charakteristika, die, zumal in ihrer Kombination, bislang mit den konventionellen und bekannten Verbindungen in Dübelmassen nicht zu erfüllen waren. Dazu gehören insbesondere

- niedrige Viskosität
- extrem niedrige Flüchtigkeit
- extrem hoher Siedepunkt
- hoher Flammpunkt
- niedere Toxizität
- Hydrophobie
- hohe Verträglichkeit mit vielen Polymeren und Harzen
- relativ niedriger Eigenschrumpf auch bei Homopolymerisation
- hohe Adhäsion an den Grenzflächen nach dem Härten
- sehr hohe hydrolytische Stabilität, auch unter alkalischen und sauren Konditionen.

Bei den zur erfindungsgemäßen Verwendung in den reaktiven Dübelmassen gelangenden Verbindungen handelt es sich vorzugsweise um Derivate von Estern ungesättigter Carbonsäuren mit Verbindungen aus der Gruppe der cyclischen Olefine, wie Mono-, Bi- und Polycycloalkene; der Fulvene, wie Triafulvene, Pentafulvene, Heptafulvene, Pentalene und Hydro-Pentalene und deren Homologen. Hierzu gehören auch die Fulvalene. Es handelt sich vor allem um Cyclopentadien-, Cyclohexadien- und Cycloheptatrien-Derivate mit oder ohne semicyclischer Doppelbindung. Dieser Gruppe zuzuordnen sind auch die Norbornene, Nobornadiene, Decaline, cyclische Decane, Terpene und ihre Homologen, insbesondere solche mit Cyclopentanringen (z.T. auch Iridoide genannt). Besonders bevorzugt in den neuen Dübelmassen ist die erfindungsgemäße Verwendung von cycloaliphatischen Verbindungen der Formel

$$(R-\overset{\overset{O}{\|}}{C}-X)_{n}R^{1}-A \qquad (I)$$

worin A die obige Bedeutung hat,
R der Kohlenwasserstoffrest einer ethylenisch ungesättigten, gegebenenfalls Hydroxy-, Nitril-, Halogen- und/oder $C_1$-$C_4$-alkylsubstituierten Carbonsäure, vorzugsweise einer Acryl-, Methacryl- und/oder Crotonsäure ist,
X = -O-, -N($R^2$)-, -NH-C(O)- und/oder die Gruppe R-C(O)-X- für einen ethylenisch ungesättigten Dicarbonsäureimidrest, vorzugsweise Maleinsäureimidrest steht,
$R^1$ ein, gegebenenfalls Hydroxy-, Amino-, $C_1$-$C_8$-Alkyl-, $C_1$-$C_8$-Alkoxy- und/oder Oxyalkyl-substituierter, gesättigter oder ungesättigter, mindest zweiwertiger Kohlenwasserstoffrest, vorzugsweise ein aliphatischer Kohlenwasserstoffrest ist und gegebenenfalls -C(O)-O-, -O-C(O)-O-, -O-C(O)-, -O-, -C(O)-, -NH-C(O)-NH-,

$$\begin{array}{c} R^2 \\ | \\ -N- \end{array}$$

und/oder -NH-C(O)-Brückenglieder aufweist, $R^2$ = H, R-C(O)-, -$R^1$-A und/oder $C_1$-$C_4$-Alkyl sein kann und n = 1 bis 5 ist.

In den Verbindungen der Formel (I) kann R der Kohlenwasserstoffrest z.B. der Methacryl-, Chloracryl-, Cyanacrylsäure und dergl. sein, wobei der Acryl- und Methacrylsäurerest besonders bevorzugt sind.

Ganz bevorzugt sind Verbindungen, in denen X Sauerstoff ist.

Der Rest $R^1$ enthält mindestens eine R-C(O)-X-Gruppe, worin R und X die obige Bedeutung haben können und bei mehreren R-C(O)-X-Resten innerhalb eines Moleküls die Reste R bzw. X jeweils gleich oder verschieden sein können. Gegebenenfalls vorhandene Brückenglieder des Rests $R^1$ können sowohl innerhalb des Rests, namentlich bei aliphatischen Resten $R^1$ und/oder ein- oder beidseitig endständig als Brückenglieder des Restes $R^1$ zu X bzw. A angeordnet sein. In einer ganz besonders bevorzugten Ausführungsform ist $R^1$ ein mindestens zweiwertiger, gegebenenfalls substituierter Glykol- oder Polyol-Rest mit 2 - 6 C-Atomen, der zweiwertige Rest einer aliphatischen Oxicarbonsäure mit 2 - 18 C-Atomen oder der zweiwertige Rest einer Carbonsäure -$C_2$-$C_6$-Glykol- oder $C_6$-$C_{80}$-Polyalkylenglycolesters ist. $R^1$ kann z.B. auch eine $C_1$-$C_4$-Alkylen-Gruppe sein, die gegebenenfalls mit niedrigen Alkylgruppen substituiert ist. Vorzugsweise ist der Rest $R^1$ mit dem Rest A über eine Ätherbrücke oder eine Estergruppe verbunden. Eine weitere Gruppe verwendbarer, gut geeigneter cycloaliphatischer, ethylenisch ungesättigt substituierter Verbindungen weisen die allgemeine Formel

$$(R-X)_n\, R^1-A \qquad (II)$$

auf, worin R eine Allyl- oder Vinylgruppe ist und X, $R^1$ , A und n die obigen Bedeutungen haben können.

Bevorzugt werden insbesondere Verbindungen gemäß der Formel (I) verwendet, in denen -X-$R^1$-

$$\left(O-[CH_2]_p\right)_m O- , \qquad \left(O-[CH_2]_p\right)_m O-R^3- ,$$

sowie Reste der allgemeinen Formeln

$$-O\left[\begin{array}{c} R^4 \\ | \\ C \\ | \\ R^4 \end{array}\right]_{m+1} , \qquad \left(O-CH_2-CH_2\right)_m O-\underset{\underset{O}{\|}}{C}- , \qquad -O\left(R^3-O-\overset{\overset{O}{\|}}{C}-O\right)_m R^3-O- ,$$

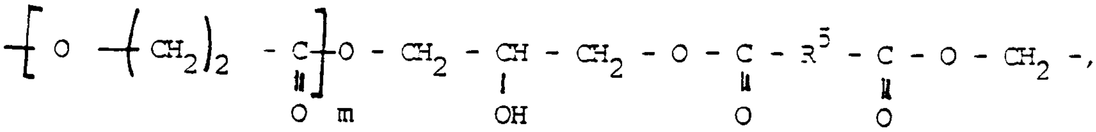

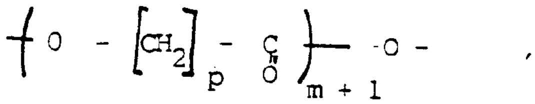

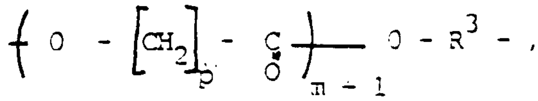

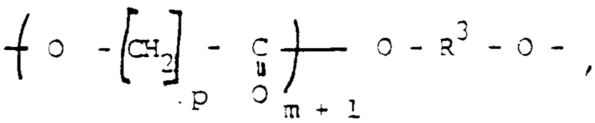

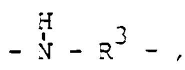 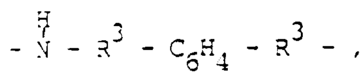

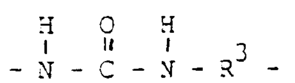 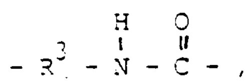

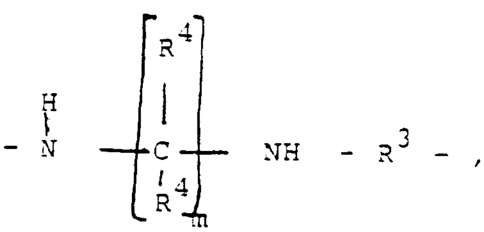 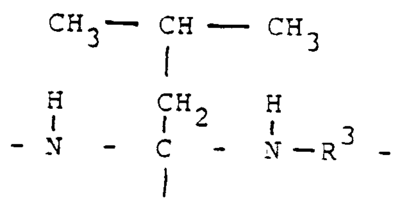

und/oder - $(CH_2)_m$ - sein können,
$R^3$ gleich oder verschieden und verzweigte und unverzweigte sowie cyclische Alkylenreste mit 1 - 50, vorzugsweise 1 - 20 Kohlenstoffatomen, Arylenreste, Aralkylenreste und/oder Acylreste mit 1 - 20 C-Atomen sein können,
$R^4$ gleich H, Cl, CN, CH, $C_1$ - $C_4$ - Alkyl ,
$R^5$ gleich -CH=CH-, $-CH_2-CH_2-$,

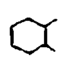 , 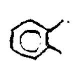

m = 0 - 50
p = 1 - 20 sein können.

Eine weitere bevorzugte Gruppe von Verbindungen sind solche der Formeln

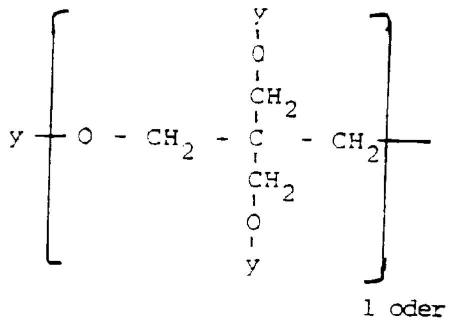 und/oder 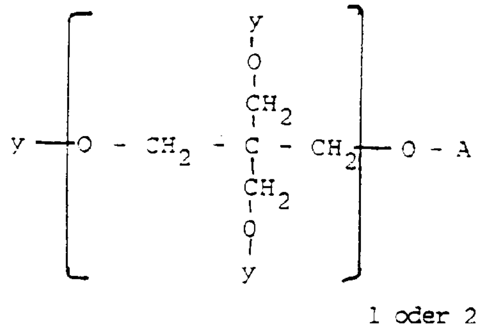

worin

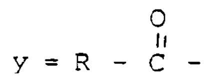

und/oder A ist, jedoch mindestens einer der Reste

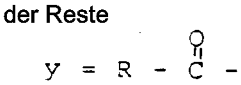

ist und A und R die obige Bedeutung haben.

Besonders bevorzugt sind Ester von verschiedenen ungesättigten Carbonsäuren, insbesondere Acryl- und Methacrylsäure, mit einem Glykolmonodicyclopentenylether der allgemeinen Formeln:

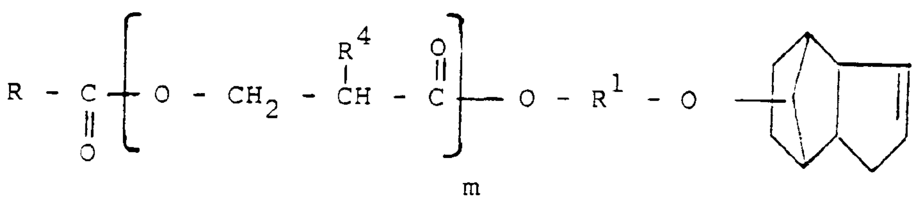

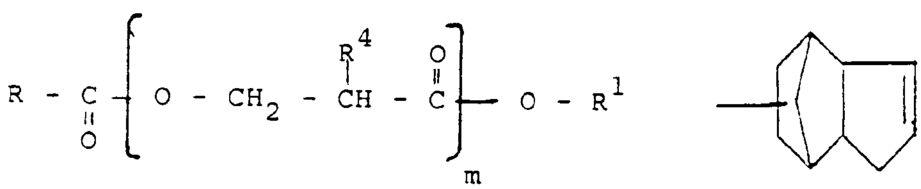

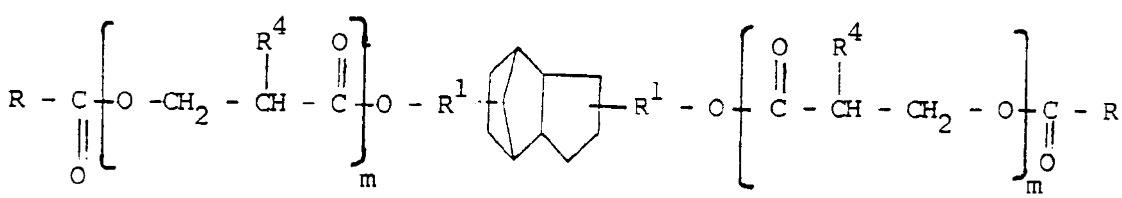

sowie die Ester von verschiedenen ungesättigten Carbonsäuren, insbesondere Acryl- und Methacrylsäure, mit Terpenalkoholen der allgemeinen Formel:

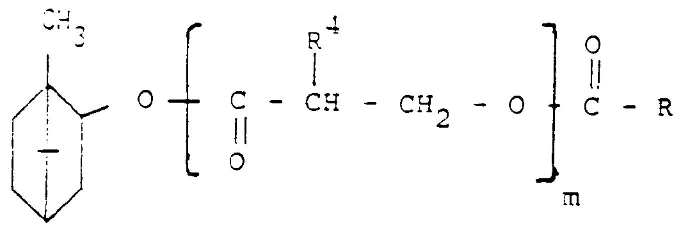

worin R, $R^1$, $R^4$ und m die obigen Bedeutungen haben.

Weiter haben sich bewährt:

- Dihydrodicyclopentadienylester ungesättigter Carbonsäuren, wie z.B. Ester der Acryl- und Methacrylsäure
- Dicyclopentenyloxyalkylester ungesättigter Carbonsäuren, wie z.B. Ester der Acryl- und Methacrylsäure
- Bornyl- und Isobornylester ungesättigter Carbonsäuren, z.B. Isobornylmethacrylat
- Ester ungesättigter Carbonsäuren z.B. Ester der Acryl- und Methacrylsäure mit Ethergruppen enthaltenden tricyclischen Decandiolen der allgemeinen Formel:

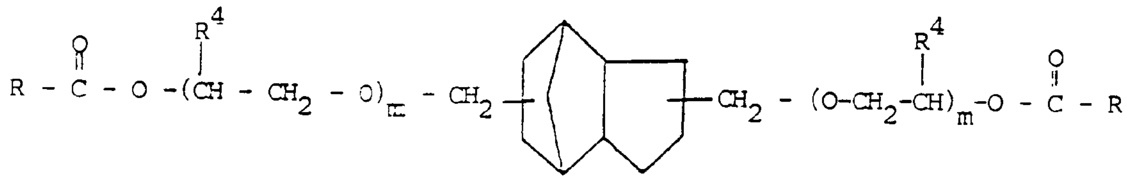

- Ester ungesättigter Carbonsäuren z.B. der Acryl- und Methacrylsäure mit tricyclischen Decanolen der allgemeinen Formel:

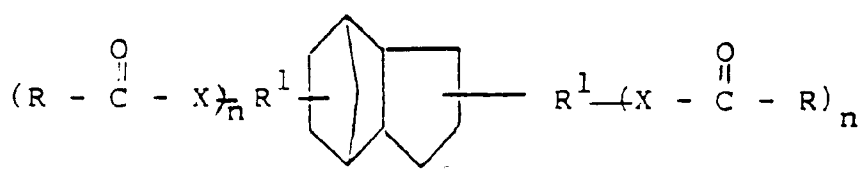

wobei das

Tricyclo-[5.2.1.0.$^{2.6.}$]-decan

in der 3,8-, 3,9- oder 4,8-Stellung mit einem Rest

$$R - \underset{\underset{O}{\|}}{C} - X - R^1 -$$

disubstituiert ist, worin $R^1$

$$= - CH_2 - O - \underset{\underset{O}{\|}}{C} - R_3 - \underset{\underset{O}{\|}}{C} - O - CH_2 - \underset{\underset{OH}{|}}{CH} - CH_2 - O \left[ \underset{\underset{O}{\|}}{C} - \overset{\overset{R^4}{|}}{CH} - CH_2 - O \right]_m \underset{\underset{O}{\|}}{C} -$$

bedeutet, und in den obigen Formeln X, R, $R^1$, $R^3$, $R^4$, n und m die zuvor angegebenen Bedeutungen haben.

Beispiele für solche Verbindungen sind Diacryl- und Dimethacrylsäureester von

3,8-Di(hydroxymethyl)-tricyclo-5.2.1.0.$^{2.6}$ -decan oder
3,9-Di(hydroxymethyl)-tricyclo-5.2.1.0.$^{2.6}$ -decan oder
4,8-Di(hydroxymethyl)-tricyclo-5.2.10.$^{2.6}$ -decan und

Ester von ungesättigten Carbonsäuren, z.B. Acryl-, Methacryl- und Crotonsäure von α- oder β-Decalol, wie z.B. Tricyclo

5.2.1.0$^{2.6}$ -decan-8- oder -9-ol, Tricyclo-
5.2.1.0$^{2.6}$-decan-3- oder -4-ylmethanol.

Beispiele hierfür sind u.a.

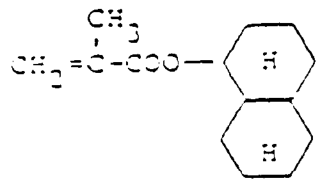

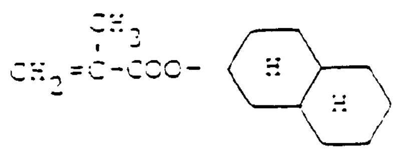

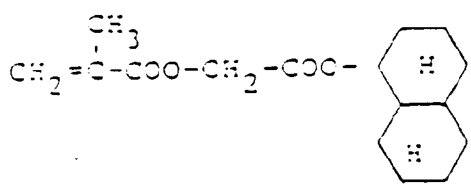

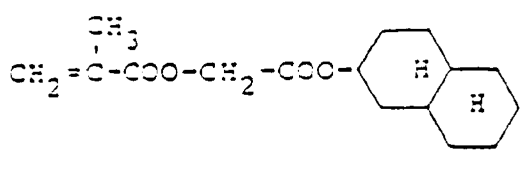

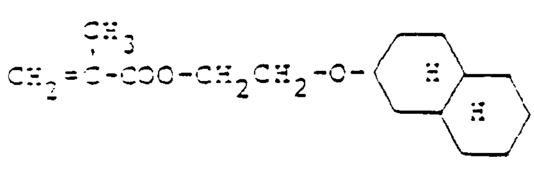

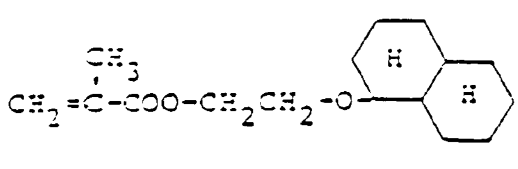

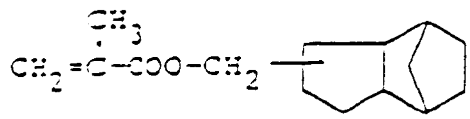

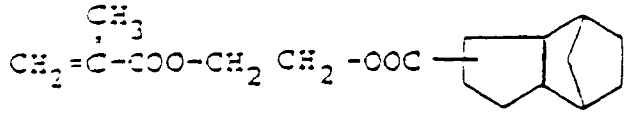

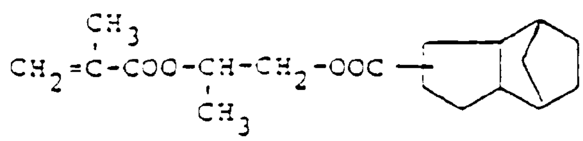

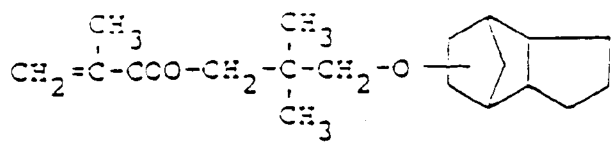

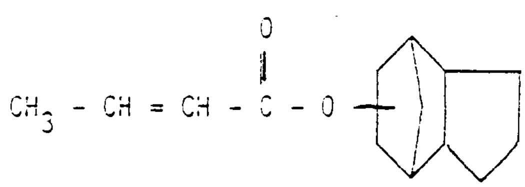

Besonders gute Ergebnisse ergaben sich mit cycloaliphatischen Verbindungen der Formeln

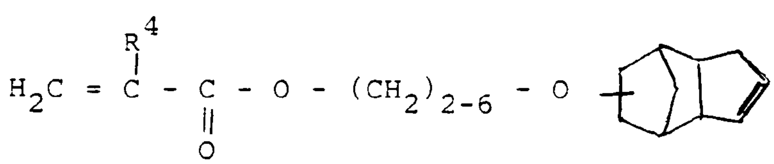

(III)

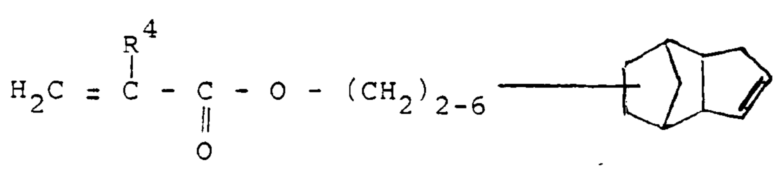

(IV)

worin die Reste $R^4$ die obigen Bedeutungen haben können.
Auch Verbindungen der Formeln

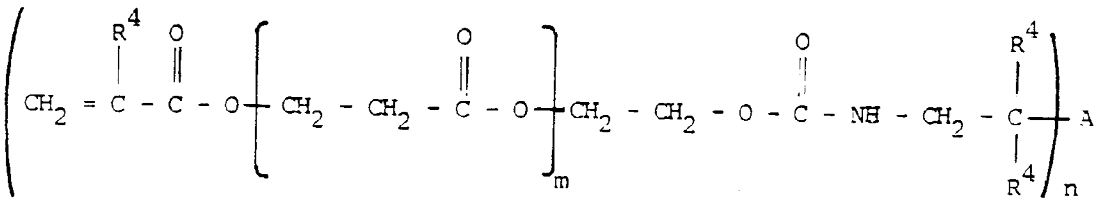

und

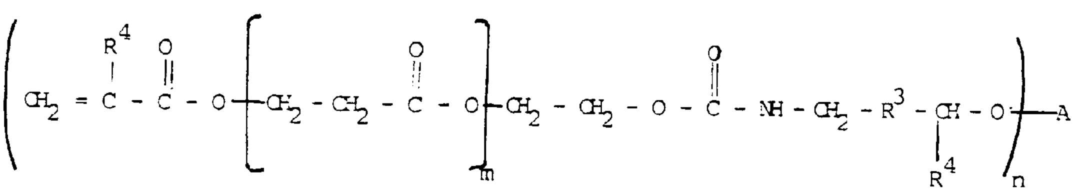

worin $R^3$ und $R^4$ die vorgenannte Bedeutung haben, m = 0 - 10, insbesondere 0 - 5 und n = 1 bis 3 ist und Trinorbornen-ethoxy-trimethylolpropantrimethacrylat, Dinorbornen-polyethylenglykoldimethacrylat erwiesen sich als brauchbar.

Die Verbindungen mit olefinischer, allylgruppen-artiger Ungesättigtheit im cyclo-aliphatischen System, wie dies einige obengenannte Verbindungen zeigen, besitzen duale Härtungsfunktionen, d.h. sie können sowohl freiradikalisch als auch über eine Autoxidation gehärtet werden. Diese duale Reaktivität und der extrem hohe Siedepunkt der flüssigen Ester-Ether-Monomeren machen sie besonders deshalb für Dübelmassen geeignet, weil sie im besonderen bislang nicht erfüllbare Eigenschaften bzw. Charakteristika den Dübelmassen verleihen.

Verbindungen mit Allylgruppen sind autoxidierbar. Sollte z.B. bei einer freiradikalischen Polymerisation kein homogenes Untermischen des Härters, z.B. organisches Peroxid, in einer Dübelmasse mit einem Gehalt an erfindungsgemäßen allylgruppenhaltigen Verbindungen erfolgen, so wird die Durchhärtung einer solchen Masse nicht unterbrochen, wenn Metallkatalysatoren, d.h. sogenannte Trocknungsmittel bzw. Sikkative vorhanden sind. Wird eine Schicht aus einer derartigen Dübelmasse der Einwirkung atmosphärischen Sauerstoffs ausgesetzt, erfährt die Verbindung eine Autoxidation an der ungesättigten Stelle im Ring mit anschliessender Polymerisation der Doppelbindung in der Estergruppe. Diese letztere Polymerisation erfolgt trotz der Einwirkung von molekularem Sauerstoff, der normalerweise eine derartige Polymerisation hemmt. Vermag nun ein Rückgratpolymer, zB ein ungesättigter Polyester, mit den erfindungsgemäss enthaltenen, allylgruppentragenden Verbindungen eine wirksame Autoxidation aufgrund ihrer chemischen Strukturen zu bewirken, dann hat die Verwendung der Monomeren der Erfindung eine dichte Vernetzung zur Folge. Diese bedingt offensichtlich eine extensive chemische Bindung sowie eine physikalische Vermischung zwischen dem Rückgratpolymer und der allylgruppenhaltigen Verbindung. Die autoxidative Wirkung von Sauerstoff mit einem Trocknungsmittel ist auch dann gegeben, wenn das Rückgratpolymer nur eine geringe oder überhaupt keine Anfälligkeit gegenüber einer Autoxidation zeigt. Denn der durch die autoxidative Wirkung erzeugte Fluss freier Radikale löst eine anschliessende Vinylpolymerisation der allylgruppenhaltigen Verbindung sowie des eine ethylenisch ungesättigte Gruppe tragenden Rückgratpolymers aus. Ueber diese duale Reaktivität der allylgruppenhaltigen Verbindung wird den Dübelmassen auf der Grundlage von Rückgratpolymeren mit mindestens einer ethylenisch ungesättigten Gruppe ein hohes Mass an zusätzlicher Funktionssicherheit gegeben, weil an den Applikationsstellen viele Imponderabile gegeben sind. Da in den wenigsten Anwendungsfällen von Dübelmassen völlig anaerobe Härtungsbedingungen gegeben sind, tragen insbesondere die allylgruppentragenden Verbindungen auch dann zu einer Abbindung und Härtung bei, wenn der freiradikalische Polymerisationsinitiator nicht homogen untergemischt oder gänzlich vergessen wurde. Diese Tatsache liefert einen relativ hohen Sicherheitsbeiwert für die Befestigungstechnik und stellt einen wesentlichen technischen Fortschritt dar.

Eine der wichtigen Eigenschaften für die Eignung als Dübelmasse ist das Schrumpfverhalten. Hohe Schrumpfwerte, wie sie beim Aushärten der konventionellen Dübelmassen mit monoethylenisch ungesättigten Monomeren gegeben sind, lassen sich auch durch den Zusatz von inerten Füllstoffen nicht optimal kompensieren. Der bei der Härtung entstehende Schrumpf führt zB beim Befestigen einer Ankerstange im Bohrloch

dazu, dass sich an den Grenzflächen zwischen Bohrlochwand und Dübelmassen kein adhäsiver Stoffschluss, sondern überwiegend nur ein Formschluss ausbildet und damit die Sicherheit bei Lastaufbringung gefährdet ist. Diese Geschehnisse sind auch dafür verantwortlich, dass beim Einsatz von konventionellen Dübelmassen ein relativ sehr hoher Sicherheitsbeiwert (3- bis 4-fache) bauaufsichtlich vorgeschrieben wird. Der relativ hohe Schrumpfwert der bekannten Dübelmassen ist auch mit einer hohen Sprödigkeit der ausgehärteten Dübelmassen verbunden, wodurch bei dynamischer Belastung bedenklich kritische Befestigungswerte auftreten.

Die Schrumpfung ist auch Ursache dafür, dass beim Formschluss keine absolut abdichtende Dübelmassenschicht, sondern ein Ringspalt zwischen Befestigungselement und Bohrlochwandung entsteht. Somit können in dem nicht dicht abgeschlossenen Ringspalt - vor allem an den Grenzflächen - Wasser, korrodierende Medien und Gase eindiffundieren und die Werkstoffe und ausgehärtete Dübelmasse schädigen.

Unabhängig von den vorstehenden Nachteilen werden die bekannten Dübelmassen durch den umgebenden Luftsauerstoff - zumindest an den Oberflächen - inhibiert, weil sie vorzugsweise auf freiradikalisch härtenden Systemen aufgebaut sind. Da dieser Luftsauerstoff bei porösen Werkstoffen im Bohrlochboden an der Bohrlochwandung vorhanden ist, werden Inhibitionen der Härtungsreaktionen auch über den Grenzflächenbereich hinaus beobachtet. Denn bei der Inhibition der Abbindereaktion wird die Dübelmasse nicht durchgehärtet und sie bleibt weich und "klebrig" und ist für eine markante Schwächung der Verbundfestigkeit verantwortlich. Solche nicht durchgehärteten Dübelmassenreste können zusätzlich die Umwelt verschmutzen und müssen über Sondermüll entsorgt werden.

Weitere Nachteile der konventionellen Monomere (Vernetzer) in Dübelmassen ist der niedrige Flammpunkt und die damit verbundene Deklarationspflicht "brennbar", wie dies bei Monostyrol mit einem Flammpunkt von +30 °C und oberen und unteren Explosionspunkten von +60,8/+29,1 °C gegeben ist. Aber auch die sehr niedrige Verdunstungszahl von 19,5 (DIN 53 170), der stark reizende Geruch und der niedrige MAK-Wert von Monostyrol sind negative arbeitshygienische und Umweltfaktoren, die gerade beim Einsatz von Dübelmassen in Wohnbereichen zusätzlich Anlass zu Ursachenbeseitigungen dieser und anderer Nachteile geben.

Die nach der erfindungsgemässen Verwendung erhältlichen Dübelmassen können auf anorganischer, metallorganischer und/oder organischer Basis aufgebaut sein. Dabei werden die ungewöhnlichen Eigenschaften, auch in der Kombination mit Rückgratpolymeren und den anderen üblichen Zusatzstoffen, voll gewahrt. Die Dübelmassen können in flüssiger, pastöser, thixotroper, halbfester und/oder fester Form vorliegen. Als anorganische monomere, oligomere bzw. polymere Verbindungen eignen sich u. a. hydraulisch abbindende Massen, Zemente, wie Portland-, Tonerdeschmelzzement, Gips, Anhydrit, Magnesit, Kalk, Silikate, zB Wasserglas aber auch mineralische inerte Materialien wie Quarzsand, Kaolin und dergleichen. Zu den metallorganischen Systemen gehören u. a. Silicium- und/ oder titanorganische Verbindungen, wie Vinylsiloxane, Vinylalkyltitanate. Für die reaktiven Dübelmassen auf monomerer, oligomerer und/oder polymerer organischer Grundlage eignen sich Verbindungen, die der Vinylpolyaddition und -polymerisation, sowie der autoxidativen Vernetzung zugänglich sind. Hierunter fallen ungesättigte monomere, oligomere und polymere Verbindungen, wie zB Vinylester, Polyester, Acryl- und Methacrylsäureester, allylgruppentragende Verbindungen und dergleichen.

Die erfindungsgemässen polymerisierbaren und copolymerisierbaren Verbindungen werden vorzugsweise in Verbindung mit Harzen bzw Rückgratpolymeren eingesetzt, die mindestens eine ethylenisch ungesättigte Doppelbindung im Molekül besitzen. Da solche Rückgratpolymere überwiegend zähflüssige bis harte, spröde Harze sind, müssen sie mit ungesättigten Lösemitteln (reaktive Verdünner) in eine applikationsgerechte Form mit angepasster Viskosität und Reaktivität gebracht werden. Diese Aufgabe können die flüssigen ungesättigten Verbindungen dieser Erfindung übernehmen, weil sie neben den vorstehend beschriebenen Vorzügen auch gute Verträglichkeits- und Löslichkeitsparameter gegenüber solchen Rückgratpolymeren besitzen.

Einige Verbindungen gemäss der Erfindung sind zähflüssige, halbfeste oder feste Produkte. Diese härtbaren, polymerisierbaren und copolymerisierbaren Verbindungen können entweder mit den erfindungsgemäss nieder-viskosen Produkten in eine applikationsgerechte Form gebracht werden oder als reaktive Schmelzdübelmasse verarbeitet werden.

Als Rückgratpolymere sind solche ungesättigten Polyesterharze besonders geeignet, die sowohl innerhalb der Molekülkette als auch in der Seitengruppe Estergruppierungen besitzen. Zu den Polyestern, in denen die Estergruppe ein Glied innerhalb der Molekülkette ist, gehören u. a. solche Polykondensate, die in der Molekülhauptkette noch Doppelbindungen enthalten und aus Dicarbonsäuren und Polyalkoholen hergestellt werden. Als Beispiele für die Dicarbonsäuren sind die Maleinsäure, Fumarsäure, Phthylsäure, Isophtalsäure, Citraconsäure, Mesaconsäure, Sebacinsäure, Trimellithsäure, dimere Fettsäuren zu nennen.

Zu dieser Gruppe gehören aber auch Phenolsäureharze, zB aus 4,4-Bis(4-hydroxyphenyl)valeriansäure und auch solche ungesättigten Polyesterharze mit epoxidharzähnlicher Struktur.

Als Polyalkohole kommen sehr zahlreiche Verbindungen in Betracht, von diesen nehmen die Glykole, wie Ethylenglykol, Propylenglykol, Butylenglykol einen bedeutenden Platz ein. Als weitere Polyole eignen sich zB Cyclohexandiol, Bisphenol A, Bisphenol F, Dialkylmaleat, Neopentylglykol u. v. m.

Zu den Polyestern, die die Estergruppe in der Seitengruppe besitzen, gehören u. a. Polyacrylsäureester, Polymethacrylsäureester.

Bevorzugt geeignet sind solche ungesättigte Polyester, die über die Umsetzung von epoxidgruppentragenden Verbindungen mit ungesättigten Carbonsäuren erhalten wurden. Solche Rückgratpolymere sind schon deshalb wasser- und verseifungsbeständiger und besitzen zugleich niedere Schrumpfwerte, weil der Gehalt an Estergruppen - im Vergleich zu den konventionellen Polyestern - relativ niedrig ist. Diese ungesättigten Polyesterharze werden in der Fachwelt auch als Epoxidacrylate bzw Epoxidmethacrylate bezeichnet, weil sie vorzugsweise durch die Umsetzung von Epoxiden mit Acryl- und Methacrylsäuren hergestellt werden. Auch Crotonsäure ist hierfür geeignet.

Als besonders geeignete Rückgratpolymere in Verbindung mit den erfindungsgemässen polymerisierbaren und copolymerisierbaren Verbindungen sind solche acryl- und methacrylfunktionalisierten Epoxidharze, die auf der Grundlage von Bisphenol A und/oder F Novolaken aufgebaut sind. Diese Basisepoxide, die mit ungesättigten Carbonsäuren funktionalisiert werden, entsprechen den allgemeinen Formeln:

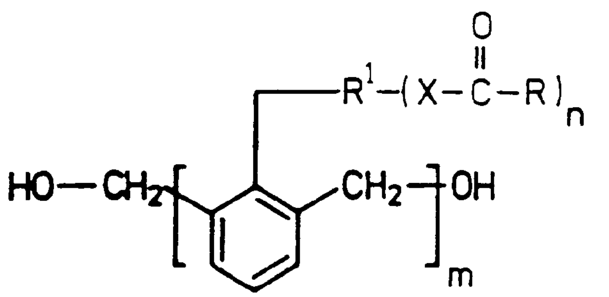

worin R, $R^1$ und X die angegebene Bedeutung haben und n = 1 - 5 und m = 2 - 50 ist,

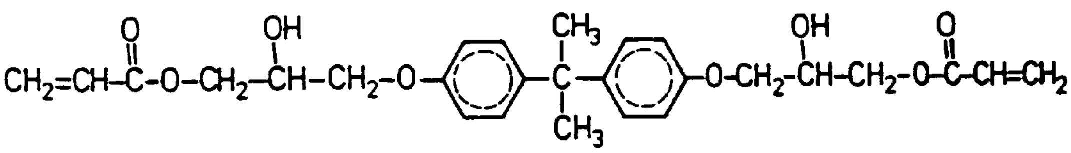

und

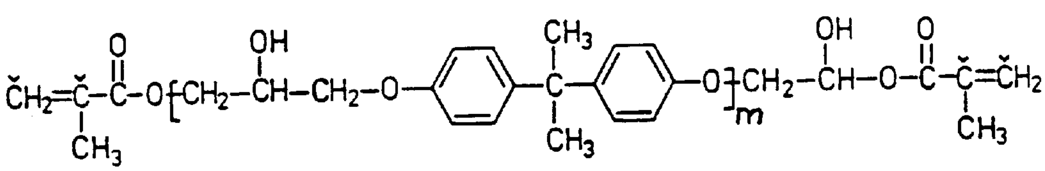

Die erfindungsgemäss in der Dübelmasse enthaltenen härtbaren, polymerisierbaren und copolymerisierbaren cycloaliphatischen Verbindungen sind im allgemeinen in Mengen von 5 bis 95 Gew.-%, vorzugsweise 10 bis 60 Gew.-%, insbesondere 30 bis 50 Gew.-% enthalten. Werden diese erfindungsgemässen härtbaren, polymerisierbaren und copolymerisierbaren Verbindungen zusammen mit einem oder mehreren der vorstehenden oder anderen Rückgratpolymeren zur Copolymerisation reaktiver Dübelmassen verwendet, betragen die gwichtsmässigen Mischungsverhältnisse zwischen 20 : 1 und 1 : 20, vorzugsweise 10 : 1 bis 1 : 10. Diese Mischungsverhältnisse werden weitgehendst von den rheologischen Eigenschaften des Rückgratpolymers und den Applikationsbedingungen der reaktiven Dübelmassen bestimmt. Daneben können noch andere polymerisierbare Verbindungen enthalten sein. Die vorstehend erwähnte duale Härtungsfunktionalität bei den allylgruppentragenden Verbindungen bleibt auch dann erhalten, wenn sie auch nur in relativ niederen Konzentrationen enthalten sind.

Die für die Härtung erforderliche Polymerisation kann als reine Homopolymerisation eines die cycloaliphatischen Reste enthaltenden ungesättigten Carbonsäureester-Derivates aber auch durch Copolymerisation eines Gemisches solcher Derivate erfolgen. Ganz bevorzugt ist indessen die Copolymerisation eines oder mehrerer solcher Derivate mit oligomeren und/oder polymeren, ungesättigter Carbonsäurereste enthaltenden Verbindungen bzw Rückgratpolymere. Hierzu gehören vorzugsweise die vorstehenden ungesättigten Polyesterharze, insbesondere die Epoxidacrylate.

Die zur Härtung erforderliche Polymerisation bzw Copolymerisation erfolgt durch Zugabe bzw homogenes Untermischen mit den für Systeme dieser Art erforderlichen Reaktionsinitiatoren. Hierzu gehören u. a. Methylethylketonperoxide, Cyclohexanperoxide, Dibenzoylperoxid, p-Chlorbenzoylperoxid, Acetylacetonperoxid, Cumolhydroperoxid und andere Polymerisationen auslösende Initiatoren. Aber auch energiereiche Strahlen, wie zB UV-Strahlen in Gegenwart eines Photoinitiator oder Elektronenstrahlen können die Polymerisation und Copolymerisation starten.

Ferner können die Polymerisation und Copolymerisation nach Zusatz eines oder mehrerer Reaktionsinitiatoren durch Zusatz eines Beschleunigers beschleunigt werden, um sie auch bei tieferen Temperaturen durchführen zu können. Hierzu sind Beschleuniger u. a. auf der Grundlage von Schwermetallsalzen, wie zB Cobaltacetylacetonat, Vanadiumnaphtenat; tertiäre Amine, wie zB Diethylanilin, Dimethyl-p-toluidin, geeignet. Bei der dualen Härtung mit den allylgruppentragenden Verbindungen ist die Gegenwart von Metallkatalysatoren, wie Trocknungsmittel bzw Sikkative angezeigt, weil sie neben ihrer katalytischen Initiierung der autoxidativen Reaktion zusätzlich die Funktion als Beschleuniger in polymerisierenden Systemen übernehmen. Die Reaktionsinitiatoren und Beschleuniger werden im allgemeinen in Mengen von 1 bis 10 Gew.-% vorzugsweise zwischen 1 und 5 Gew.-% - bezogen auf die gebrauchsfertige Dübelmasse eingesetzt. Die nach der erfindungsgemässen Verwendung zusammengesetzten Dübelmassen können als Zweikammersysteme, wobei die eine Kammer die Reaktionsinitiatoren, die andere die polymerisierbaren Verbindungen enthält, konfektioniert sein. Diese Dübelmassen lassen sich auch als Einkomponentensysteme herstellen, hierbei wird der Reaktionsinitiator oder Reaktionsbeschleuniger oder beide mikroverkapselt eingesetzt.

Die erfindungsgemässen härtbaren Massen lassen sich durch weitere Zusätze modifizieren. Geeignete Zusatzstoffe sind u. a. Weichmacher, Oele, Teere, Asphalte, Bitumina, Farbstoffe, Pigmente, Thixotropiermittel, anorganische und/oder organische Füllstoffe und Fasern. Ferner können ihnen Stabilisatoren und/oder Inhibitoren zugesetzt werden.

Von Bedeutung sind bei Dübelmassen die anorganischen und/oder organischen Füllstoffe. Als anorganische Füllstoffe sind Quarzmehle und -sande, Korunde, Gesteinsmehle besonders gut geeignet. Des weiteren können Mikrohohlkörper aus anorganischen Silikaten, Korunden und dgl. eingesetzt werden. Bei den organischen Füllstoffen handelt es sich u. a. um Mehle oder Mikrohohlkörper aus Duromeren, wie zB Phenol-Aldehyd-Harzen.

Zum Thixotropieren dieser erfindungsgemässen reaktiven Dübelmassen eignen sich u. a. pyrogene Kieselsäuren, Bentonite.

Die in den erfindungsgemässen reaktiven Dübelmassen eingesetzten Füllstoffe, Mikrohohlkörper, Thixotropiermittel und/oder Mikrokapseln können zusätzlich mit Haftbrücken bildenden Stoffen, wie Silanen, Chromkomplexen, gecoatet sein, um u. a. an den Grenzflächen verstärkte Verbunde zu erreichen. Zur Unterbindung einer Chemisorption können sie aber auch mit Stoffen, wie Fettsäuren, Fettsäureestern, beschichtet sein.

Die reaktiven Dübelmassen mit den erfindungsgemässen härtbaren, polymerisierbaren und copolymerisierbaren Verbindungen können in allen Bereichen der Befestigungstechnik, insbesondere im Bauwesen, Tiefbau, Bergbau, Maschinen- und Anlagenbau eingesetzt werden.

Die erfindungsgemässen härtbaren Dübelmassen sind abgepackt in Tuben, Patronen, Kartuschen, Dosen, Hobbocks und dergleichen, über mehrere Monate lagerfähig. Vor der Anwendung werden sie mit den Reaktionsinitiatoren homogen vermischt. Bei vorportionierten Packungen, zB Glas- oder Kunststoffpatronen als Zweikammersystem oder bei mikroverkapselten Systemen erfolgt eine Vermischung und Aktivierung zB erst im Bohrloch.

Die Erfindung wird durch die folgenden Beispiele näher erläutert, ohne jedoch darauf beschränkt zu sein.

Beispiele 1 bis 15

In der Tabelle 1 sind die Zusammensetzungen der erfindungsgemässen reaktiven Dübelmassen zusammengefasst.

Die Herstellung der Dübelmassen erfolgt in einem Planetenmischer in der Weise, dass - sofern erforderlich - zunächst das Rückgratpolymer mit einem oder mehreren der erfindungsgemässen cycloaliphatischen, ungesättigten Carbonsäure-Derivaten gelöst bzw verdünnt wird und anschliessend die Beschleuniger Diethylanilin, Dimethyl-p-toluidin und/oder Cobaltoctoat zugesetzt und homogen untermischt werden. In die vorbeschleunigte Basismischung werden dann gegebenenfalls Weichmacher und die pyrogene Kieselsäure (Thixotropiermittel) eingearbeitet. Zum Aufschluss der pyrogenen Kieselsäure kann zusätzlich ein Dissolver eingesetzt werden. Zum Schluss werden die Füllstoffe, wie Quarzmehle und -sande, Korund und Kieselerde eingearbeitet und solange im Planetenmischer gerührt bis eine homogene Mischung erzielt wurde. Nach dem Entgasen der Dübelmassen können sie in Packbehälter konfektioniert werden.

Molekulargewichte der eingesetzten Rückgratpolymere:

- Bisphenol-A-Methacrylat 492 bis 775
- Novolakepoxidacrylat (Bisphenol F, Funktionalität 2) 780 bis 1200
- Di-(methylacryloylmaleoyl)-tricyclo-5.2.1.$0^{2,6}$-decan: 709

Die eingesetzten Weichmacher waren Dioctylphtalat und Di-2-ethylhexylphtalat.

Bei den Dübelmassen nach den Beispielen 1 bis 15 handelt es sich um dosierfähige Produkte für u. a. feste Untergründe, wie Beton, Vollziegel, Gestein und dergleichen.

Beispiel 16

Es wurde eine Verbundankerpatrone der Dimension M12 wie folgt hergestellt:

a) Aussenpatrone

Die dazu verwendete Glaspatrone hatte folgende Kenndaten:

| | |
|---|---|
| Glasgewicht: | 5,6 g |
| Glasaussendurchmesser: | 10,75 mm |
| Glaswandstärke: | 0,55 mm |
| Patronenlänge: | 110 mm |

In diese Aussenpatrone wurde die nachstehend beschriebene Innenpatrone gesteckt und das verbleibende Hohlraumvolumen mit

| | |
|---|---|
| 3,0 g | Bisphenol-A-methacrylat, aminvorbeschleunigt |
| 1,3 g | Dicyclopentenyloxyethylmethacrylat |
| 6,6 g | Quarzsand, 1,5 bis 2,0 mm |

verfüllt.

b) Innenpatrone

Die Glaspatrone hatte folgende Kenndaten:

| | |
|---|---|
| Glasgewicht: | 1,2 g |
| Glasaussendurchmesser: | 6,3 mm |
| Glaswandstärke: | 0,65 mm |
| Patronenlänge: | 80 mm |

Dieses Innenrohr war mit Dibenzoylperoxid, 20 %, phlegmatisiert mit Kreide, gefüllt.

Beispiel 17

34,5 Gewichtsteile (GT) eines festen ungesättigten Polyesterharzes*) wurden in 28,0 GT Dicyclopentenyloxyethylmethacrylat in einem Planetenmischer gelöst und mit 1,2 GT Diethylamin vorbeschleunigt. Anschliessend wurden 4,2 GT Diotylphthalat und 4,0 GT pyrogene Kieselsäure (spez. Oberfläche ca. 200 $m^2/g$) mit einem Dissolver (3.500 UpM) eingearbeitet. In diese homogene Masse wurden 28,1 GT Mikrohohlkörper aus Silikat (0,02 bis 0,15 mm) mit dem Planetenmischwerkzeug (120 UpM) eingerührt. Zum Schluss wurden 2,2 Dibenzoylperoxidpaste, 50 %ig in Weichmacher, untergemischt.

Die Masse hat folgende Kenndaten:

| | |
|---|---|
| Gelierzeit($t_{gel}$): | 5 bis 8 Minuten |
| Viskosität: | 260 ± 30 Pa.s |
| Fliessgrenze: | 950 ± 50 Pa.s |
| Dichte: | 9,85 $g/cm^3$ |

*) Das UP-Harz besteht aus:
35 % Phthalsäureanhydrid, 24 % Maleinsäureanhydrid
26 % Diethylenglykol und 15 % Ethylenglykol

Diese dosierfähige Dübelmasse ist besonders für Hohlmauerwerk geeignet.

Beispiel 18

25 GT Siloxandimethacrylat (Molekulargewicht (MG 1200) wurde mit 25 GT Di-(methylacryloyl-maleoyl)-tricyclo-5.2.1.$0^{2,6}$-decan und 1,8 GT Cobaltoctoat (6 % Co) homogen bei einer Temperatur von +50 °C im Planetenmischer gemischt. Anschliessend wurde 4,2 GT pyrogene Kieselsäure (spez. Oberfläche: 200 $m^2/g$) eingetragen und mit einem Dissolver (3.500 UpM) eingearbeitet. Anschliessend erfolgte ein Zusatz von 44 GT Mikrohohlkörper aus Silikat (0,1 bis 0.7 mm). Zum Schluss wurden 4,2 GT Cumolhydroperoxid, 80 % in Cumol, zugesetzt und homogen untermischt.

Die Masse hatte folgende Kenndaten:

| | |
|---|---|
| Gelierzeit ($t_{gel}$): | 10 bis 15 Minuten |
| Viskosität: | 210 ± 20 Pa.s |
| Fliessgrenze: | 900 - 950 Pa.s |
| Dichte: | 0,98 $g/cm^3$ |

Beispiel 19

Es wurde folgende vorbeschleunigte einkomponentige Dübelmasse in einem Planetenmischer hergestellt:

| | |
|---|---|
| 60 GT | Novolakepoxidacrylat, Bisphenol F-Typ, vorbeschleunigt mit mikroverkapseltem Cobaltacetylacetonat |
| 40 GT | Dicyclopentenyloxyethylmethacrylat |
| 1 GT | pyrogene Kielselsäure (200 $m^2/g$) |
| 2 GT | Zinkoxid |
| 1 GT | Magnesiumoxid |
| 40 GT | Mikrohohlkörper aus Mg-Ca-Silikat Korngrösse: 0,3 mm |
| 1 GT | Methacrylsäure |
| 15 GT | mikroverkapseltes Cumolhydroperoxid, 50 % in Cumol, Korngrösse: 0,1 mm |
| 2 GT | mikroverkapseltes Cobaltacetylacetonat |
| 38 GT | Quarzsand, gecoatet mit Vinylsilan, Korngrösse: 0,1 - 0,25 mm |

Die einkomponentige Dübelmasse wurde in Polyethylen-Kartuschen abgefüllt und war gebrauchsfertig.

Beispiel 20

Das Beispiel 19 wurde wiederholt, aber anstelle von Cumolhydroperoxid-Mikrokapseln wurden Dibenzoylperoxid-Mikrokapseln und als Beschleuniger mikroverkapseltes Diethylanilin und mikroverkapseltes Dimethyl-p-toluidin in den gleichen Mengenverhältnissen eingesetzt.

Die erfindungsgemässen reaktiven Dübelmassen der Beispiele 1 bis 20 wurden anwendungstechnisch auf ihre Aushärtung, Auszugswerte und Verbundfestigkeiten geprüft. Folgende Werte wurden ermittelt:

Als Bau- bzw Werkstoffe wurden Beton, Hohlmauerwerk, Gestein und Vollziegel gewählt. Der eingesetzte Beton entsprach den Qualitäten B15, B25, B35 und B45. Der eingesetzte Beton B35 hatte folgende Werte:

B35 - Istfestigkeit: $\beta_w$ = 48 $N/mm^2$

Die eingesetzten Gewindestangen entsprachen M12, 5.8 und M12, 12.9, hochfest.

Die Bohrlöcher hatten folgende Kenndaten:

| | | |
|---|---|---|
| Bohrlochtiefe: | 110 | mm |
| Bohrlochdurchmesser | | |
| für 2-komponentige Massen: | 14 | mm |
| für 1-komponentige Massen mit mikroverkapselten Härtungssystemen: | 12,8 | mm |

Die ermittelten Prüfdaten sind Durchschnittswerte auf 5 Prüfungen und in Tabelle 2 zusammengefasst.

Tabelle 1

| ROHSTOFFE | DÜBELMASSE - ZUSAMMENSETZUNG-Nr. (GEWICHTSTEILE) | | | | | | | | | | | | | | |
|---|---|---|---|---|---|---|---|---|---|---|---|---|---|---|---|
| | 1 | 2 | 3 | 4 | 5 | 6 | 7 | 8 | 9 | 10 | 11 | 12 | 13 | 14 | 15 |
| Bisphenol-A-Methacrylat | 22,2 | - | 7,63 | 21,3 | - | - | - | | - | | 22,2 | - | 10,0 | - | - |
| Novolakepoxidacrylat | - | 34,5 | 9,85 | - | - | - | - | | 27,0 | 14,5 | - | 30,5 | 10,0 | - | - |
| Di-(methylacryloyl-maleoyl)-tricyclo-5.2.1.$0^{2.6}$-decan | - | - | - | 5,8 | - | 20,5 | 20,5 | 20,5 | - | 11,0 | - | - | 8,0 | - | - |
| Dicyclopentenyloxyethylmethacrylat | 13,2 | 28,0 | 16,14 | 10,0 | 48,2 | - | - | - | - | - | - | - | - | - | - |
| Dicyclopentenyloxyethylcrotonat | - | - | - | - | - | 16,5 | - | - | - | - | - | 10,5 | - | 45,0 | - |
| 3-Methacryloyl-oxymethyl-tricyclo-5.2.1.$0^{2.6}$-decan | - | - | - | - | - | - | 14,5 | - | - | - | - | - | - | - | - |
| 3-Methacryloylglykolsäure-2-ylester | - | - | - | - | - | - | - | 17,0 | - | - | - | - | - | - | - |
| Dimethacryloxymethyltricyclododecan | - | - | - | - | - | - | - | - | - | - | 13,2 | - | - | - | 38,0 |
| Dihydrodicyclopentadienylmethacrylat | - | - | - | - | - | - | - | - | - | | - | - | 12,0 | - | - |
| Isobornylmethacrylat | - | - | - | - | - | - | - | - | - | 15,0 | - | - | - | - | - |
| Decalyl-2-methacrylat | - | - | - | - | - | - | - | - | 13,0 | - | - | - | - | - | - |
| Quarzmehl, 0 - 0,063 mm | - | 27,1 | 14,0 | - | - | 23,0 | - | - | - | - | - | 10,5 | - | 14,5 | 18,0 |
| Quarzsand, 0,1 bis 0,25 mm | 30,0 | - | 46,96 | 52,46 | 23,0 | 20,8 | - | 21,2 | - | - | 30,0 | 20,0 | 26,9 | 14,6 | 22,0 |
| Quarzsand, 0,3 bis 0,65 mm | 30,1 | - | - | - | - | - | - | 30,6 | 45,0 | - | 30,1 | 19,1 | 20,0 | 14,5 | - |
| Quarzsand, 1,5 bis 2,0 mm | - | - | - | - | - | - | - | - | - | 49,7 | - | - | | - | - |
| Aluminiumkorund, 1 - 2 mm | - | - | - | - | - | - | 56,55 | - | 10,0 | - | - | - | | - | - |
| Kieselsäure, pyrogene | - | 4,0 | 0,66 | 2,66 | 0,55 | 3,2 | 4,2 | 4,5 | 3,5 | 2,8 | - | 3,4 | 2,8 | 5,0 | 4,3 |
| Kieselerde | - | - | - | - | 22,0 | 10,0 | - | - | - | - | - | - | - | - | 11,7 |
| Dibenzoylperoxid, 20 % in Kreide | - | | - | - | - | - | - | - | - | - | - | - | 6,0 | - | - |
| Dibenzoylperoxid, 50 % in Weichmacher | 4,45 | 2,2 | 4,52 | 3,7 | 2,93 | - | - | - | - | - | 4,45 | - | - | - | - |
| Cumolhydroperoxid, 80 % | - | - | - | - | - | 4,8 | 3,5 | 4,2 | 4,5 | 4,9 | - | 4,2 | 3,0 | 4,8 | 4,1 |
| Diethylanilin | - | - | 0,04 | 0,16 | 0,32 | - | - | - | - | - | - | - | 0,5 | - | - |
| Dimethyl-p-toluidin | 0,05 | - | - | - | - | - | - | - | - | - | 0,05 | - | 0,05 | - | - |
| Weichmacher | - | 4,2 | 0,2 | 3,92 | 3,00 | - | - | - | - | - | - | - | - | - | - |
| Cobaltoctoat, 6 % Co | - | - | - | - | - | 1,2 | 0,75 | 2,0 | 2,0 | 2,1 | - | 1,8 | 0,75 | 1,6 | 1,9 |

Tabelle 2 : Prüfwerte

| DÜBELMASSEN Beispiel-Nr. | GELIERZEIT Minuten | AUSHÄRTUNGSZEIT Minuten | AUSZUGSWERT kN | VERBUNDFESTIGKEIT $\tau$ N/mm² | BEMERKUNGEN |
|---|---|---|---|---|---|
| 1 | 3-4 | 35 | 74 | - | Beton B35 Ankerstange 8.8 |
| 2 | 5-7 | 35 | 80 | - | Beton B35, Ankerstange 12.9, hochfest |
| 3 | 6-7 | 30 | 5,8<br>14,5 | - | Hohllochziegel 6 (Poroton)<br>Kalksandstein (KSL 12) |
| 4 | 60 | 480 | 34,5<br>48,9 | - | Beton B15<br>Beton B45 Ankerstange 5.8 |
| 5 | 4 | 25 | 97,4 | - | Beton B25, schwach armiert (1") |
| 6 | 3 | 20 | 24,5 | - | Ziegel ( $\beta_w \approx 40$ N/mm² ) |
| 7 | 6-7 | 35 | 52,3 | - | Beton B35, Ankerstange 5.8 |
| 8 | 5 | 25 | 40,8 | | Beton B35 " " |
| 9 | 4-6 | 25 | 55,2 | - | Beton B35 " " |
| 10 | 3 | 20 | 52,7 | - | Beton B35 " " |
| 11 | 5 | 25 | 50,1 | - | Beton B35 " " |
| 12 | 6 | 30 | 50,9 | - | Beton B35 " " |
| 13 | 4 | 25 | 49,3 | - | Beton B35 " " |
| 14 | 5 | 30 | 44,6 | - | Beton B35 " " |
| 15 | 4-5 | 30 | 39,4 | - | Beton B35 " " |
| 16 | 4-5 | 30 | 71,0 | ≥ 12 | Beton B35, Ankerstange 12,9, hochfest |
| 17 | 8 | 40 | 51 | - | Hohllochziegel (Poroton) |
| 18 | 7 | 35 | 45,3 | - | Beton B35, Ankerstange 5.8 |
| 19 | 2-3 | 25 | 68 | ≥ 14 | Beton B35, " 8.8 |
| 20 | 1-2 | 20 | 72 | ≥ 10 | Beton B35, " 8.8 |

## Patentansprüche

1. Verwendung von durch Polymerisation härtbaren cycloaliphatischen Verbindungen der Gruppe A, bestehend aus

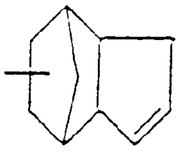 , 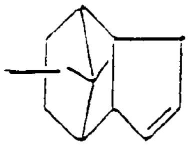 , 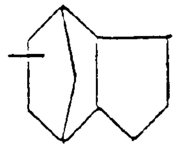 , 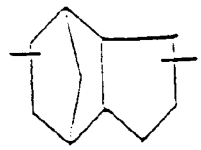 ,

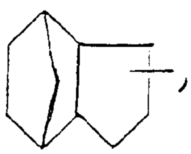 , 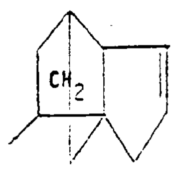 , 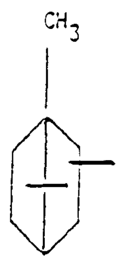 , 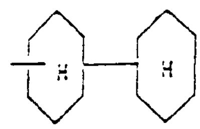 ,

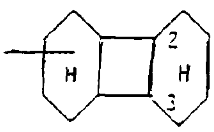 , 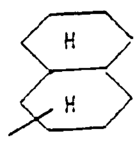 , 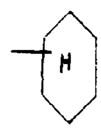 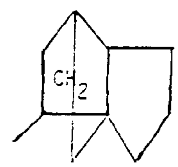

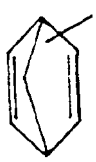 , 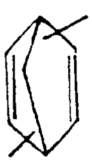 , 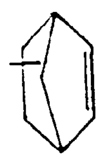 , 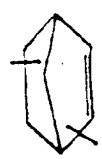 ,

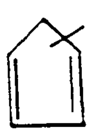 , 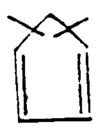 , 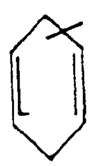 , 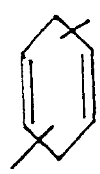 ,

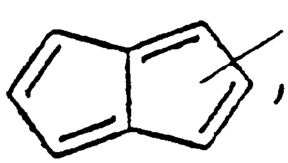 , 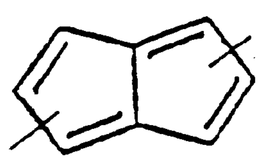

die einfach oder mehrfach durch ethylenisch ungesättigte Reste substituiert sind in und als Dübelmassen zur Befestigung von Verankerungen in Aufnahmewerkstoffen.

2. Verwendung nach Patentanspruch 1, **gekennzeichnet durch** cycloaliphatische Verbindungen der Formel (I)

$$(R-\overset{\overset{O}{\|}}{C}-X)_{n}R^{1}-A \qquad (I)$$

worin A die obige Bedeutung hat,
R der Kohlenwasserstoffrest einer ethylenisch ungesättigten, gegebenenfalls Hydroxy-, Nitril-, Halogen- und/oder $C_1$-$C_4$-alkylsubstituierten Carbonsäure, vorzugsweise einer Acryl-, Methacryl- und/oder Crotonsäure ist,
X = -O-, -N($R^2$)-, -NH-C(O)- und/oder die Gruppe R-C(O)-X- für einen ethylenisch ungesättigten Dicarbonsäureimidrest, vorzugsweise Maleinsäureimidrest steht,
$R^1$ ein gegebenenfalls Hydroxy-, Amino-, mehfach R-C(O)-X-, $C_1$-$C_8$-Alkyl-, $C_1$-$C_8$-Alkoxy- und/oder Oxyalkyl-substituierter, gesättigter oder ungesättigter Kohlenwasserstoffrest, vorzugsweise ein aliphatischer Kohlenwasserstoffrest ist und gegebenenfalls -C(O)-O-, -O-C(O)-O-, -O-C-(O)-, -O-, -C(O)-, -NH-C(O)-NH-,

$$-\overset{R^2}{\overset{|}{N}}-$$

und/oder -NH-C(O)-Brückenglieder aufweist, $R^2$ = H, R-C(O)-, -$R^1$-A und/oder $C_1$-$C_4$-Alkyl sein kann, und n = 1 bis 5 ist.

3. Verwendung nach Anspruch 1, **gekennzeichnet durch** cycloaliphatische Verbindungen der Formel (II)

$$(R-X)_{n}R^{1}-A \qquad (II)$$

worin R eine Allyl- oder Vinylgruppe ist, X, $R^1$, A und n die gleiche Bedeutung wie zuvor haben.

4. Verwendung nach einem der vorhergehenden Patentansprüche, **gekennzeichnet durch** cycloaliphatische Verbindungen, in denen -X-$R^1$-

$$-\left(O-[CH_2]_p\right)_m-O-, \qquad -\left(O-[CH_2]_p\right)_m-O-R^3-,$$

sowie Reste der allgemeinen Formeln

$$-O-\left[\begin{matrix}R^4\\|\\C\\|\\R^4\end{matrix}\right]_{m+1}, \quad -\left(O-CH_2-CH_2\right)_m-O-\underset{\underset{O}{\|}}{C}-, \quad -O-\left(R^3-O-\overset{\overset{O}{\|}}{C}-O\right)_m-R^3-O-,$$

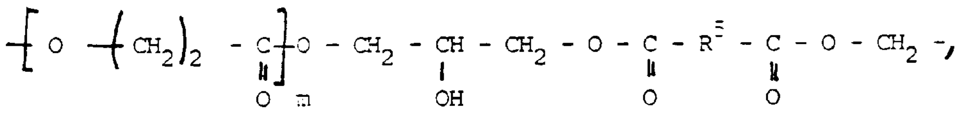

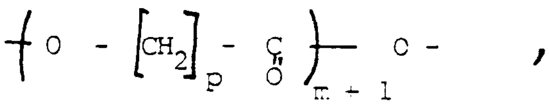

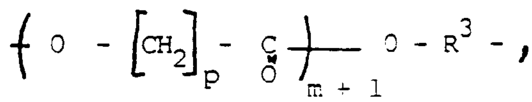

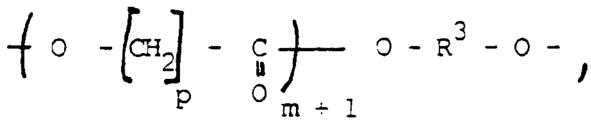

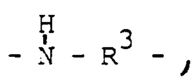 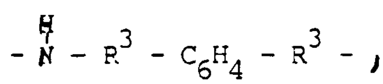

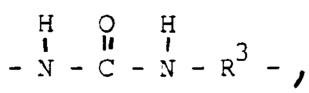 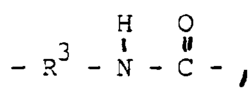

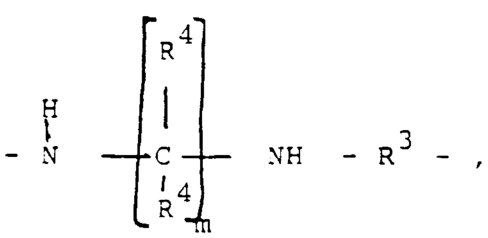 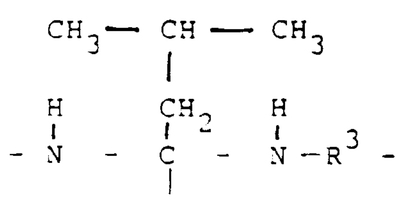

und/oder $-(CH_2)_m-$ sein können,
$R^3$ gleich oder verschieden und verzweigte und unverzweigte sowie cyclische Alkylenreste mit 1 - 50, vorzugsweise 1 - 20 Kohlenstoffatomen, Arylenreste, Aralkylenreste und/oder Acylreste mit 1 - 20 C-Atomen sein können,
$R^4$ gleich H, Cl, CN, OH, $C_1$ - $C_4$ - Alkyl ,
$R^5$ gleich -CH=CH-, $-CH_2-CH_2-$,

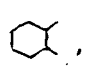, 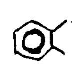,

m = 0 - 50
p = 1 - 20 sein können.

5. Verwendung nach einem der vorhergehenden Patentansprüche, **gekennzeichnet durch** Verbindungen der Formeln

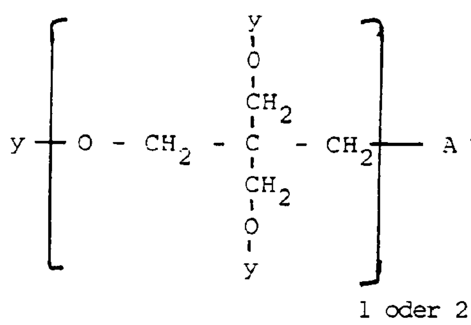

und/oder

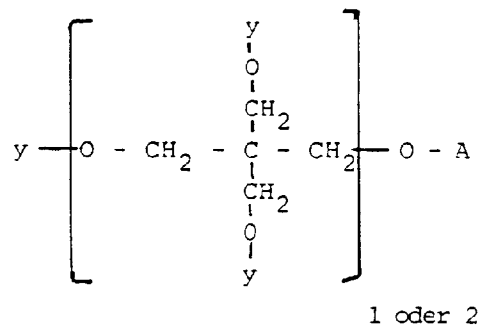

worin

$$y = R - \overset{O}{\overset{\|}{C}} -$$

und/oder A ist, jedoch mindestens einer der Reste

$$y = R - \overset{O}{\overset{\|}{C}} -$$

ist und A und R die obige Bedeutung haben.

6. Verwendung nach einem der vorhergehenden Patentansprüche, **dadurch gekennzeichnet,** daß der cycloaliphatische Rest eine Allylgruppe enthält.

7. Verwendung nach Anspruch 1 oder 2, **dadurch gekennzeichnet**, daß der Rest $R^1$ ein mindestens zweiwertiger, gegebenenfalls substituierter aliphatischer Polyolrest mit 2 - 6 C-Atomen, der zweiwertige Rest einer aliphatischen Oxycarbonsäure mit 2 - 18 C-Atomen oder der zweiwertige Rest eines Carbonsäure-$C_2$-$C_6$-polyol-oder $C_6$-$C_{80}$-polyalkylenglycolesters ist.

8. Verwendung nach einem der vorhergehenden Patentansprüche, **dadurch gekennzeichnet,** daß die cycloaliphatische Verbindung

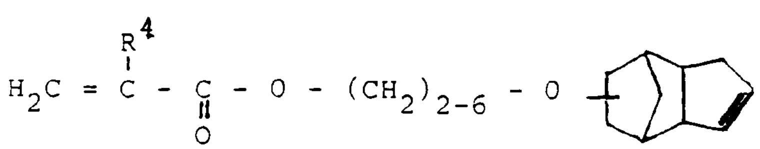

(III)

ist, worin $R^4$ die obige Bedeutung hat.

9. Verwendung nach einem der vorhergehenden Patentansprüche, **dadurch gekennzeichnet**, daß die cycloaliphatische Verbindung

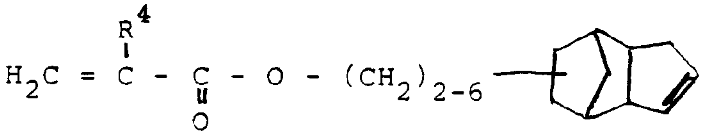 (IV)

ist, worin $R^4$ die obige Bedeutung hat.

**10.** Verwendung nach einem der vorhergehenden Patentansprüche, **dadurch gekennzeichnet,** daß zusätzlich ungesättigte, vorzugsweise copolymerisierbare Polyester in Mengen von 20:1 bis 1:20, vorzugsweise 10:1 bis 1:10, enthalten sind.

**11.** Verwendung nach Anspruch 10, **dadurch gekennzeichnet,** daß als zusätzliche Polyester acryl- und/oder methacrylfunktionalisierte Epoxidharze (Epoxidacrylate), vorzugsweise auf Basis von Bisphenol A, F und/oder Novolaken, enthalten sind.

## Claims

**1.** Use of cycloaliphatic compounds of Group A which are capable of being hardened by polymerization. comprising

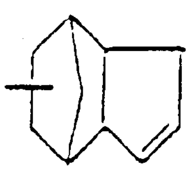 , 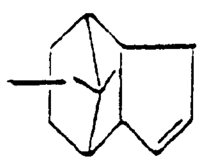 , 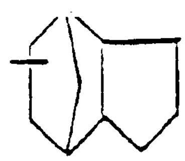 , 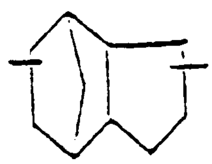 ,

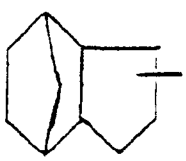 , 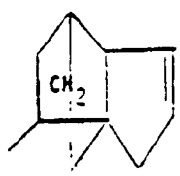 , 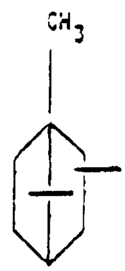 , 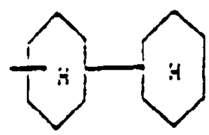 ,

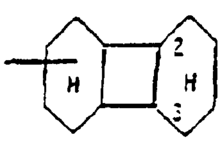 , 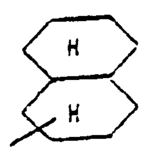 , 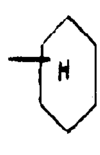 . 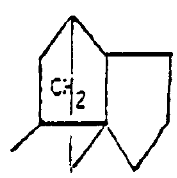

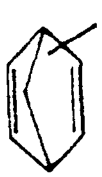 , 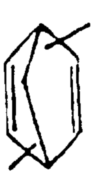 , 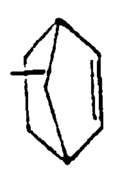 , 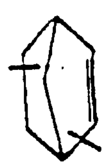 ,

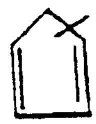, 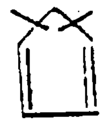, 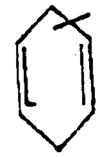, 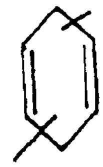,

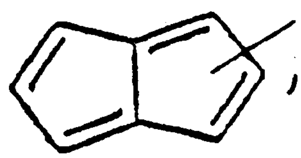, 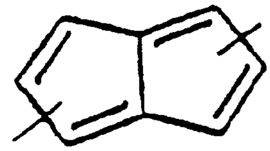

which are once or several times substituted by ethylenic unsaturated groups in and as dowelling materials for fastening anchor elements in a support material.

2. Use according to patent claim 1, **charecterised by** cycloaliphatic compounds of the Formula (I)

$$(R-\overset{\overset{O}{\parallel}}{C}-X)-_n R^1-A \qquad (I)$$

where A has the above meaning,
R is the hydrocarbon residue of an ethylenic unsaturated carboxylic acid, optionally hydroxy-, nitrile-, halogen- and/or $C_1$-$C_4$-alkyl substituted, preferably an acrylic, methacrylic and/or crotonic acid,
X = -O-, -N($R^2$)-, -NH-C(O)-
and/or the Group R-C(O)-X- represents an ethylenic unsaturated dicarboxylic acid imide group, preferably maleic acid imide group,
$R^1$ is a saturated or unsaturated hydrocarbon group, optionally a hydroxy-, amino-, multiple R-C(O)-X-, $C_1$-$C_8$-Alkyl-, $C_1$-$C_8$-alkoxy- and/or oxyalkyl-substituted, preferably an aliphatic hydrocarbon group and, optionally, containing -C(O)-O-. -O-C(O)-O-, -O-C(O)-, -O-, -C(O), -NH-C(O)-NH-,

$$\overset{R^2}{-N-}$$

and/or -NH-C(O)- bridging elements;
$R^2$ = H, R-C(O)-, -$R^1$-A and/or $C_1$-$C_4$-alkyl, and
n = 1 to 5.

3. Use according to claim 1, **characterised by** cycloaliphatic compounds of Formula (II)

$$(R-X)-_n R^1-A \qquad (II)$$

where R is an allyl or vinyl group, X, $R^1$, A and n have the same meaning as before.

4. Use according to one of the above claims, **characterised by** cycloaliphatic compounds, wherein -X-$R^1$- can be

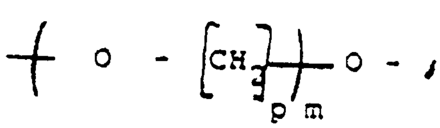, 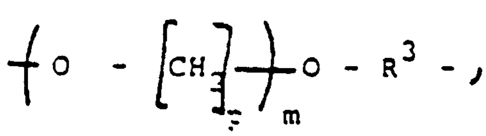,

as well as groups of the general formulae

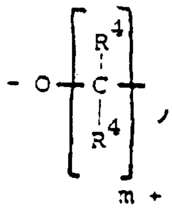,
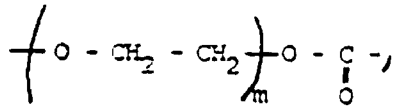,
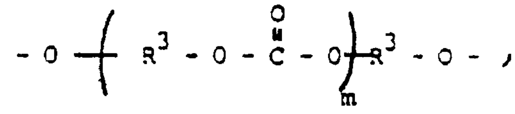

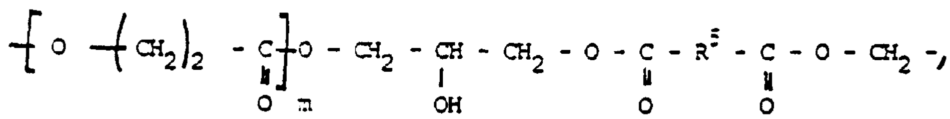

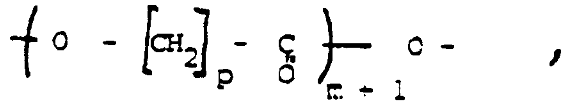

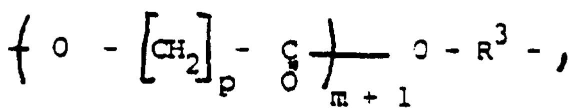

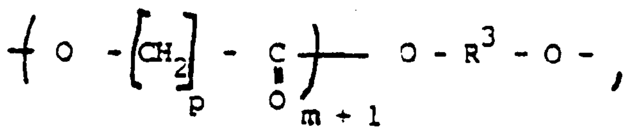

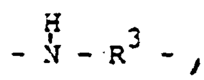,
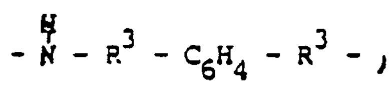

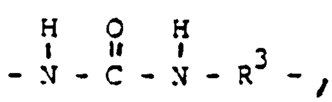,
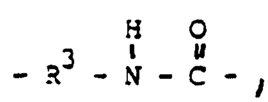

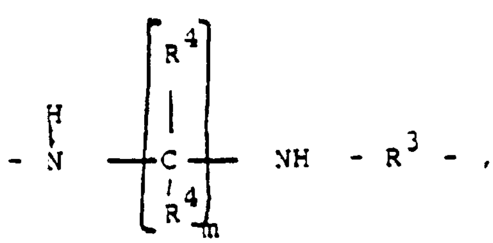,
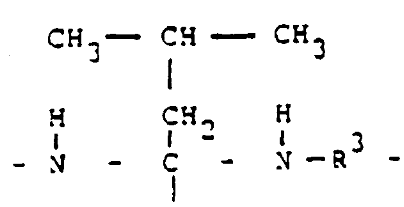

and/or - $(CH_2)_m$;

$R^3$ can be equal or different and branched and not branched as well as cyclic alkylene groups with 1 - 50, preferably 1 - 20 carbon atoms, arylene groups , aralkylene groups and/or acyl groups with 1 - 20 C-atoms;

$R^4$ equals H, Cl, CN, OH, $C_1$ - $C_4$ - Alkyl,
$R^5$ equals -CH=CH-, $-CH_2-CH_2-$,

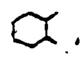 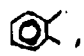

m = 0 - 50
p = 1 - 20

5. Use according to one of the above claims, **characterised by** compounds of the formulae

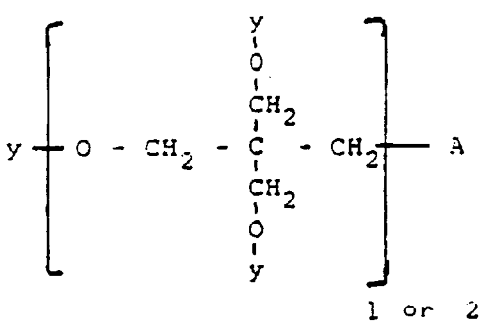 and/or 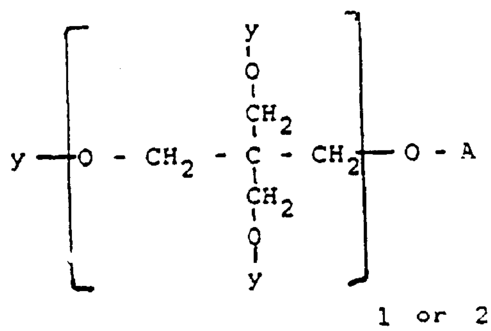

where

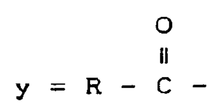

and/or A, however, with at least one of the groups

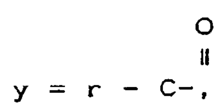

and A and R have the above meaning.

6. Use according to one of the above claims, **characterised in that** the cycloaliphatic group contains an allyl group.

7. Use according to claim 1 or 2, **characterised in that** the group $R^1$ is an aliphatic polyol group with 2 - 6 C-atoms, at least a bivalent, optionally substituted, the bivalent residue of an aliphatic hydrooxycarboxylic acid with 2 - 18 C-atoms or the bivalent residue of a carboxylic acid-$C_2$-$C_6$-polyol- or $C_6$-$C_{80}$-polyalkylene glycolester.

8. Use according to one of the above claims, **characterised in that** the cycloaliphatic compound is

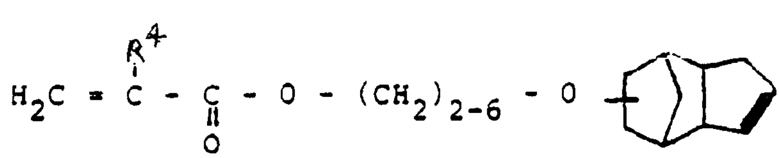 (III)

where $R^4$ has the above meaning.

**9.** Use according to one of the above claims, **characterised in that** the cycloaliphatic compound is

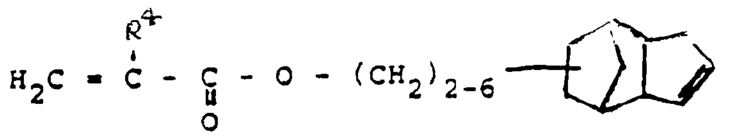

(IV)

where $R^4$ has the above meaning.

**10.** Use according to one of the above claims, **characterised in that** there are unsaturated, preferably copolymerizable polyesters in addition in quantities between 20:1 and 1:20, preferably 10:1 to 1:10.

**11.** Use according to claim 10, **characterised in that** the additional polyesters are acrylic and/or methacrylic-functionalized epoxide resins (epoxide acrylates), preferably based on bisphenol A, F and/or novolaks.

## Revendications

**1.** Utilisation de composés cycloaliphatiques durcissables par polymérisation, du groupe A, constitué de:

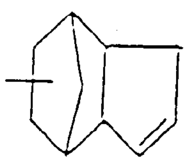 , 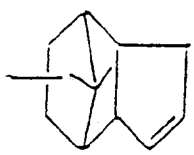 , 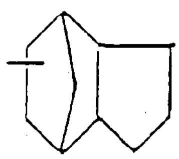 , 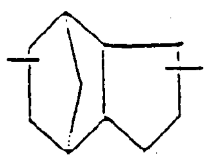 ,

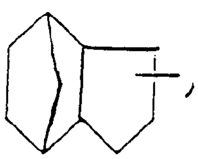 , 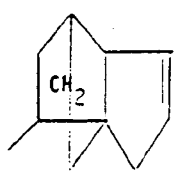 , 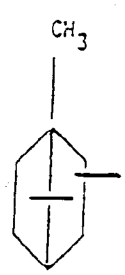 , 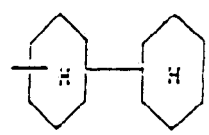 ,

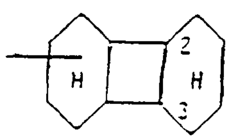 , 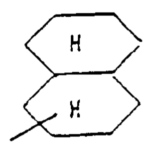 , 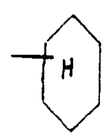 . 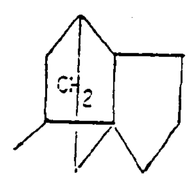

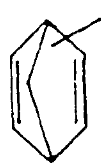 , 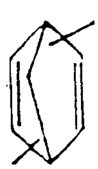 , 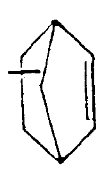 , 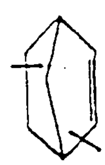 ,

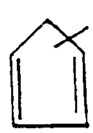 , 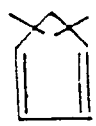 , 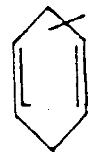 , 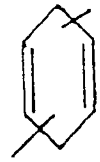 ,

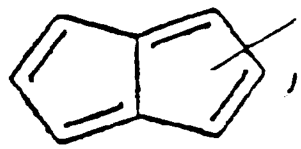 , 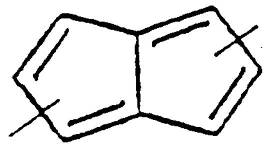

qui sont substitués par un ou plusieurs des restes à insaturation éthylénique, dans des compositions de mastic pour la consolidation d'ancrages dans des matériaux récepteurs.

2. Utilisation selon la revendication 1, caractérisée par des composés cycloaliphatiques de formule (I)

$$(R\text{-}\overset{\overset{O}{\|}}{C}\text{-}X)_n\text{-}R^1\text{-}A \qquad (I)$$

dans laquelle

A présente la signification mentionnée plus haut,

R représente le reste hydrocarboné d'un acide carboxylique à insaturation éthylénique, éventuellement substitué par un groupe hydroxy, nitrile, halogéno et/ou alkyle en $C_1$-$C_4$, de préférence l'acide acrylique, méthacrylique et/ou crotonique,

X représente -O-, -N($R^2$)-, -NH-C(O)- et/ou le groupe R-C(O)-X- représente un reste d'imide d'acide dicarboxylique à insaturation éthylénique, de préférence un reste maléimide,

$R^1$ représente un reste hydrocarboné saturé ou insaturé, éventuellement substitué par un groupe hydroxy, amino, plusieurs groupes R-C(O)-X-, alkyle en $C_1$-$C_8$, alcoxy en $C_1$-$C_8$ et/ou oxyalkyle, de préférence un reste hydrocarboné aliphatique, et présente éventuellement des ponts -C(O)-O-, -O-C(O)-O-, -O-C(O)-, -O-, -C(O)-, -NH-C(O)-NH-,

$$\overset{\overset{R^2}{|}}{\text{-N-}}$$

et/ou -NH-C(O)-,

$R^2$ = H, R-C(O)-, -$R^1$-A et/ou alkyle en $C_1$-$C_4$, et

n = 1 à 5.

3. Utilisation selon la revendication 1, caractérisée par des composés cycloaliphatiques de formule (II)

$$(R\text{-}X)_n\text{-}R^1\text{-}A \qquad (II)$$

dans laquelle R représente un groupe allyle ou vinyle, X, $R^1$, A et n ont les mêmes significations que ci-dessus.

4. Utilisation selon l'une quelconque des revendications précédentes, caractérisée par des composés cycloaliphatiques dans lequels les -X-$R^1$- peuvent représenter

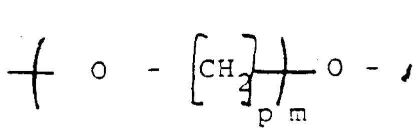 , 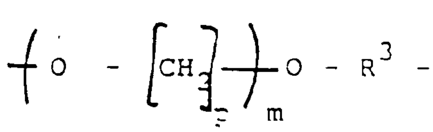 ,

ainsi que des restes de formules générales

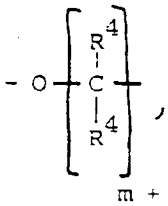,
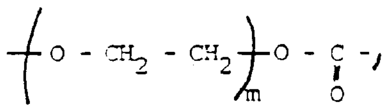,
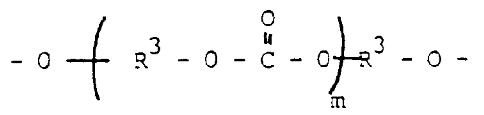,

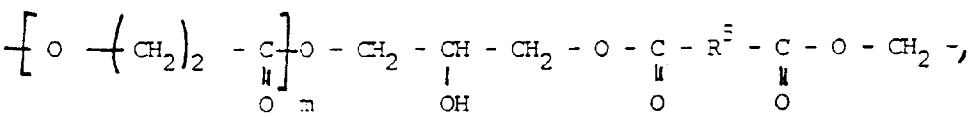,

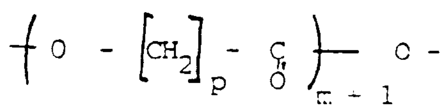,

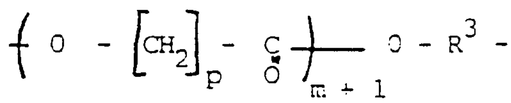,

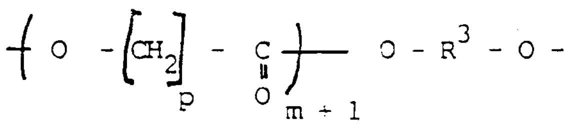,

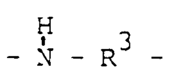,
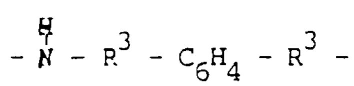,

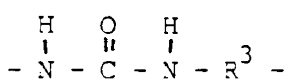,
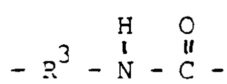,

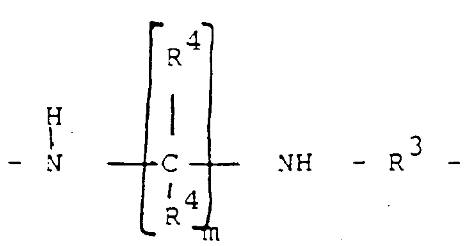,
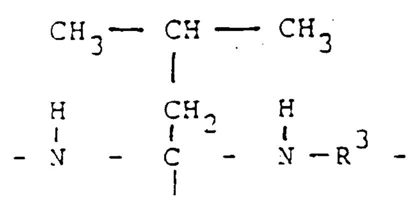

et/ou $-(CH_2)m-$,

les $R^3$ peuvent être identiques ou différents et peuvent représenter des restes alkylène à chaîne

droite ou ramifiée, ainsi que cycliques, ayant 1-50, de préférence 1-20 atomes de carbone, des restes arylène, aralkylène et/ou acyle ayant 1-20 atomes de carbone,

| | |
|---|---|
| $R^4$ | représente H, Cl, CN, OH, alkyle en $C_1$-$C_4$, |
| $R^5$ | représente -CH=CH-, $-CH_2-CH_2-$, |

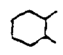 , 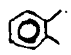 ,

| | |
|---|---|
| m | = 0-50 |
| p | = 1-20. |

5. Utilisation selon l'une quelconque des revendications précédentes, caractérisée par des composés de formules

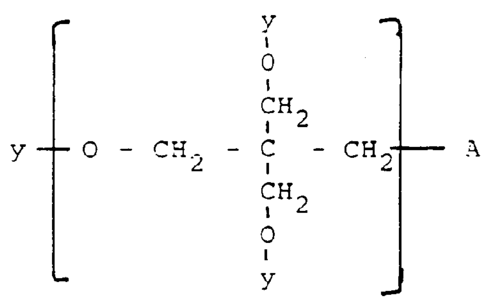 et/ou 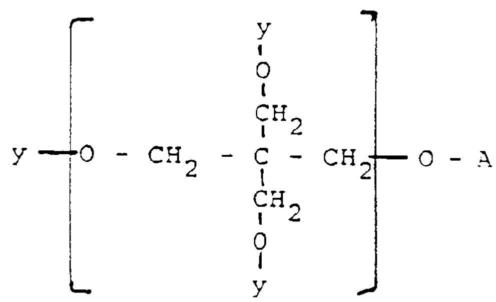

1 ou 2 1 ou 2

dans lesquelles

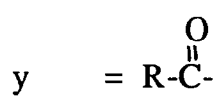

et/ou A, avec la condition qu'au moins l'un des restes

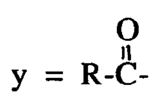

et A et R ont les significations mentionnées plus haut.

6. Utilisation selon l'une quelconque des revendications précédentes, caractérisée en ce que le reste cycloaliphatique contient un groupe allyle.

7. Utilisation selon la revendication 1 ou 2, caractérisée en ce que le reste $R^1$ est un reste polyol aliphatique au moins divalent, éventuellement susbtitué, ayant 2-6 atomes de carbone, le reste divalent d'un acide oxycarboxylique aliphatique ayant 2-18 atomes de carbone ou le reste divalent d'un ester d'acide carboxylique et de polyol($C_2$-$C_6$) ou de polyalkylène-glycol($C_6$-$C_{80}$).

8. Utilisation selon l'une quelconque des revendications précédentes, caractérisée en ce que le composé cycloaliphatique est celui de formule

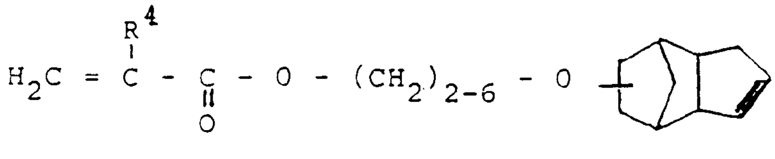

(III)

dans laquelle $R^4$ a la signification mentionnée ci-dessus.

**9.** Utilisation selon l'une quelconque des revendications précédentes, caractérisée en ce que le composé cycloaliphatique est celui de formule

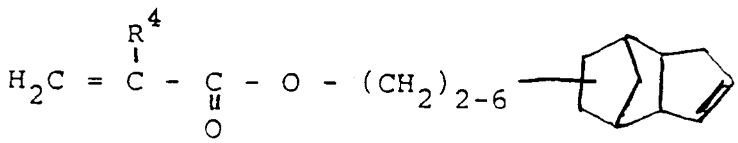

(IV)

dans laquelle $R^4$ a la signification mentionnée ci-dessus.

**10.** Utilisation selon l'une quelconque des revendications précédentes, caractérisée en ce que la composition contient en outre des polyesters insaturés, de préférence copolymérisables, en une proportion de 20:1 à 1:20, de préférence 10:1 à 1:10.

**11.** Utilisation selon la revendication 10, caractérisée par le fait que la composition contient en outre, comme polyesters additionnels, des résines époxy à fonction acrylique et/ou méthacrylique (époxyacrylate), de préférence à base de bis-phénol A, F et/ou de novolaques.